# EUROPÄISCHE PATENTSCHRIFT

(11) **EP 3 165 427 B1**
(45) Veröffentlichungstag und Bekanntmachung des Hinweises auf die Patenterteilung: **29.08.2018**
(21) Anmeldenummer: 16002217.4
(22) Anmeldetag: 14.10.2016
(51) Int. Cl.: B62D 23/00, B62D 27/02, B62D 29/00, B62D 29/04, B29C 70/48, B29C 70/84, B29C 65/70, B29C 65/00

(54) **KNOTENSTRUKTUR MIT INTEGRIERTEN LASTEINLEITUNGSELEMENTEN, VERFAHREN ZUR HERSTELLUNG, METALLISCHES LASTEINLEITUNGSELEMENT UND KRAFTFAHRZEUG**
NODE STRUCTURE WITH INTEGRATED LOAD INTRODUCING ELEMENTS, METHOD FOR PRODUCING SAME, METALLIC LOAD INTRODUCING ELEMENT AND MOTOR VEHICLE
STRUCTURE DE LIAISON COMPRENANT DES ÉLÉMENTS D'INTRODUCTION DE CHARGE INTÉGRÉS, PROCÉDÉ DE FABRICATION, ÉLÉMENT D'INTRODUCTION DE CHARGE MÉTALLIQUE ET VÉHICULE AUTOMOBILE

(30) Priorität: 06.11.2015 DE 102015014364
(43) Veröffentlichungstag der Anmeldung: 10.05.2017
(73) Patentinhaber: AUDI AG, 85045 Ingolstadt (DE)
(72) Erfinder: Eidmann, Florian, DE - 74613 Öhringen (DE)
(74) Vertreter: Eickmeyer, Dietmar

(56) Entgegenhaltungen:
- DE-A1-102011 108 156
- FR-A1- 2 772 662
- US-A1- 2003 152 745

## Beschreibung

Die Erfindung betrifft eine Knotenstruktur für eine Fahrzeugkarosserie, mit wenigstens zwei, insbesondere aus Faserkunststoffverbundmaterial gebildeten, Profilbauteilen und einem aus faserverstärktem Kunststoff gebildeten Verbindungsknoten, der die Profilbauteile an knotenseitigen Profilenden verbindet.

Die Erfindung betrifft im Weiteren auch Verfahren zur Herstellung einer solchen Knotenstruktur und ein Kraftfahrzeug.

Aus dem Stand der Technik sind Karosserieaufbauten für Kraftfahrzeuge, insbesondere Personenkraftwagen, bekannt, die aus einzelnen vorgefertigten Profilbauteilen gebildet sind, wobei die Profilbauteile an sogenannten Knotenstellen mittels Verbindungsknoten gefügt bzw. miteinander verbunden sind. Zum Stand der Technik wird bspw. auf die Patentschriften DE 102 56 608 A1, DE 10 2014 209 991 A1 und DE 10 2007 027 593 A1 hingewiesen. Ferner werden für derartige Karosserieaufbauten mit einem aus Profilbauteilen gebildeten Rahmen oder Rahmenabschnitt auch aus Faserkunststoffverbund gebildete Profilbauteile verwendet, wodurch sich mitunter erhebliche Gewichtseinsparungen erzielen lassen. Zum diesbezüglichen Stand der Technik wird bspw. auf die Patentschriften DE 44 23 642 C1, DE 10 2013 226 607 A1, DE 10 2013 220 209 A1 und US 2003/0152745 A1 hingewiesen.

Die DE 10 2011 108 156 A1 beschreibt als nächstliegenden Stand der Technik eine Verbindungsstruktur für einen Kraftwagen und ein Verfahren zum Herstellen der Verbindungsstruktur, bei welchem wenigstens zwei Profilelemente in ein Werkzeug eingelegt und durch ein Kunststoffknotenelement miteinander verbunden werden, welches in dem Werkzeug ausgehärtet wird, mit den Schritten:
- Herstellen eines Faserhalbzeugs mit Aufnahmen für korrespondierende Verbindungsbereiche der Profilelemente;
- Verbinden der Verbindungsbereiche der Profilelemente mit den Aufnahmen des Faserhalbzeugs;
- Herstellen des Kunststoffknotenelements durch Einspritzen von Kunststoff in einem Spritzpressprozess in den Formbereich des Werkzeugs.

Insbesondere bei einem Rahmen oder Rahmenabschnitt aus Faserkunststoffverbund-Profilbauteilen ist die Anbindung weiterer Bauteile mitunter schwierig und aufwendig. Ein Verkleben schafft häufig nicht die gewünschte Verbindungśfestigkeit. Beim Nieten oder Schrauben können die Verstärkungsfasern des Faserkunststoffverbundmaterials durchtrennt werden und dadurch an Wirkung verlieren. Ferner können unzulässige Lochleibungsbelastungen entstehen, die ein Kriechen der Kunststoffmatrix zur Folge haben.

Aufgabe der Erfindung ist es, Möglichkeiten aufzuzeigen, wie die Anbindung von Bauteilen an eine Knotenstruktur eingangs genannter Art verbessert werden kann.

Dies gelingt mit erfindungsgemäßen Knotenstrukturen entsprechend den Patentansprüchen 1 und 2. Mit den nebengeordneten Patentansprüchen 4 und 5 erstreckt sich die Erfindung auch auf erfindungsgemäße Verfahren zur Herstellung erfindungsgemäßer Knotenstrukturen. Mit dem nebengeordneten Patentanspruch 7 erstreckt sich die Erfindung im Weiteren auch auf ein erfindungsgemäßes Kraftfahrzeug. Bevorzugte Weiterbildungen und Ausgestaltungen der Erfindung ergeben sich analog für alle Erfindungsgegenstände aus den abhängigen Patentansprüchen, der nachfolgenden Beschreibung und den Figuren.

Die erste erfindungsgemäße Knotenstruktur ist dadurch gekennzeichnet, dass deren Verbindungsknoten mit integrierten metallischen Lasteinleitungselementen, d. h. wenigstens einem Lasteinleitungselement, für die Anbindung wenigstens eines weiteren Bauteils ausgebildet ist. Die metallischen Lasteinleitungselemente weisen einen Verankerungsteller und eine davon abragende Hülse auf, wobei die Verankerungsteller mit einem Verdrehschutz ausgebildet sind, wobei die Hülse mit einer Taillierung ausgebildet ist. Die zweite erfindungsgemäße Knotenstruktur ist dadurch gekennzeichnet, dass wenigstens eines der Profilbauteile an seinem anderen (nichtknotenseitigen) Profilende ein aus faserverstärktem Kunststoff gebildetes Profilendstück aufweist, das mit integrierten metallischen Lasteinleitungselementen, d. h. wenigstens einem Lasteinleitungselement, für die Anbindung wenigstens eines weiteren Bauteils ausgebildet ist. Die metallischen Lasteinleitungselemente weisen einen Verankerungsteller und eine davon abragende Hülse auf, wobei die Verankerungsteller mit einem Verdrehschutz ausgebildet sind, wobei die Hülse mit einer Taillierung ausgebildet ist. Die Erfindung sieht also vor, dass der aus faserverstärktem Kunststoff gebildete Verbindungsknoten und/oder wenigstens ein aus faserverstärktem Kunststoff gebildetes Profilendstück mit integrierten (d. h. baulich eingebundenen bzw. eingegliederten, insbesondere stoffschlüssig ein- oder angebundenen) metallischen Lasteinleitungs- bzw. Krafteinleitungselementen ausgebildet ist. Diese Lasteinleitungselemente ermöglichen die Befestigung wenigstens eines weiteren Bauteils an der Knotenstruktur bzw. die Befestigung der Knotenstruktur an wenigstens einem weiteren Bauteil, insbesondere mittels Schrauben oder dergleichen.

Bevorzugt sind die Profilbauteile aus Faserkunststoffverbundmaterial (womit im Weiteren ein konsolidierter und ausgehärteter Faserkunststoffverbundwerkstoff gemeint ist) gebildet. Bevorzugt werden die Profilbauteile aus vorgefertigten Profilhalbzeugen (insbesondere Stangenware) hergestellt. Die Profilbauteile können aus dem selben Faserkunststoffverbundmaterial oder aus unterschiedlichen Faserkunststoffverbundmaterialien gebildet sein. Im Verbindungsknoten sind die Profilbauteile an ihren knotenseitigen Profilenden durch Einbindung in den faserverstärkten und insbesondere Kurzfasern enthaltenden Kunststoff (wobei es sich bspw. um Kohlenstofffasern, Glasfasern und/oder sonstige Fasern, auch Mischfasern und insbesondere auch Recyclingfasern, handeln kann, die z. B. eine Länge von 1 mm bis 100 mm, bevorzugt von 2 mm bis 50 mm und insbesondere von 3 mm bis 25 mm aufweisen können) form- und gegebenenfalls auch stoffschlüssig verbunden. Bei den Matrixwerkstoffen kann es sich sowohl um thermoplastische Kunststoffe als auch bevorzugt um duroplastische Kunststoffe (Harze) handeln.

Die integrierten Lasteinleitungselemente sind als separate Elemente aus Metall, insbesondere aus Aluminium, gebildet und im faserverstärkten Kunststoff des Verbindungsknoten und/oder des Endstücks verankert oder in sonstiger geeigneter Weise befestigt.

Bei einem solchen, aus Metall und insbesondere aus Aluminium gebildeten Lasteinleitungselement handelt es sich um ein Lasteinleitungselement, welches einen Verankerungsteller (bzw. Flansch) und eine davon abragende Hülse (bzw. Buchse) aufweist, wobei die Hülse mit einer Taillierung ausgebildet sein kann. Die Taillierung schafft bei der Einbettung in Kunststoff, insbesondere in faserverstärkten Kunststoff, einen durch Hinterschneidung gebildeten Formschluss. Bevorzugt ist die Hülse mit einem Innengewinde ausgebildet, in das eine Befestigungsschraube oder dergleichen eingeschraubt werden kann. Der Verankerungsteller des Lasteinleitungselements Ist mit einer Verdrehsicherung bzw. einem Verdrehschutz ausgebildet, bspw. in Gestalt von Verprägungen.

Metallische Lasteinleitungselemente für Faser-Kunststoff-Verbund-Bauteile (sogenannte Inserts) sind als solche aus dem Stand der Technik bereits bekannt (siehe z. B. DE 198 34 772 C2).

Bevorzugt ist das metallische Lasteinleitungselement mit einer Beschichtung, insbesondere einer KTL-Beschichtung, versehen, um dadurch bspw. einen korrosiven Kontakt mit aus Kohlenstoff gebildeten Verstärkungsfasern zu vermeiden.

Ein solches Lasteinleitungselement kann auch als Befestigungspunkt und insbesondere als Anschraubpunkt an einem Profilbauteil verwendet werden, wozu dieses in geeigneter Weise (s. u.) am betreffenden Profilbauteil befestigbar ist.

Das erste erfindungsgemäße Verfahren zur Herstellung einer erfindungsgemäßen Knotenstruktur umfasst die Schritte:
- Bereitstellen der vorgefertigten Profilbauteile;
- Positionieren der knotenseitigen Profilenden zusammen mit metallischen Lasteinleitungselementen in einem den Verbindungsknoten erzeugenden (ersten) Presswerkzeug, wobei die Lasteinleitungselemente einen Verankerungsteller und eine davon abragende Hülse aufweisen und die Verankerungsteller mit einem Verdrehschutz ausgebildet sind;
- Ausführen eines Pressvorgangs (gegebenenfalls auch eines Spritzpressvorgangs) unter Zugabe einer (ersten) faserhaltigen Kunststoffmasse, insbesondere kurzfaserhaltigen Kunststoffmasse, zur Erzeugung eines die Profilenden verbindenden Verbindungsknotens, wobei die Lasteinleitungselemente zumindest teilweise von dieser Kunststoffmasse umformt und dadurch eingebettet bzw. in der (faserhaltigen) Kunststoffmasse verankert werden.

Das erste Verfahren kann als einstufiges Verfahren bezeichnet werden. Die Herstellung eines Lasteinleitungselemente aufweisenden Profilendstücks kann in analoger Weise erfolgen, wobei nur das mit einem Endstück zu versehenden Profilende zusammen mit den Lasteinleitungselementen in ein entsprechend ausgebildetes Presswerkzeug eingelegt wird.

Das zweite erfindungsgemäße Verfahren zur Herstellung einer erfindungsgemäßen Knotenstruktur umfasst die Schritte:
- Bereitstellen der vorgefertigten Profilbauteile;
- Positionieren der knotenseitigen Profilenden in einem den Verbindungsknoten erzeugenden (ersten) Presswerkzeug;
- Ausführen eines (ersten) Pressvorgangs (gegebenenfalls auch eines Spritzpressvorgangs) unter Zugabe einer ersten faserhaltigen Kunststoffmasse zur Erzeugung eines die Profilenden verbindenden Verbindungsknotens;
- Entnehmen der Knotenstruktur und Positionieren des zuvor erzeugten Verbindungsknotens zusammen mit metallischen Lasteinleitungselementen in einem zweiten Presswerkzeug, wobei die Lasteinleitungselemente einen Verankerungsteller und eine davon abragende Hülse aufweisen und die Verankerungsteller mit einem Verdrehschutz ausgebildet sind;
- Ausführen eines weiteren (zweiten) Pressvorgangs (gegebenenfalls auch eines Spritzpressvorgangs) unter Zugabe einer zweiten faserhaltigen Kunststoffmasse, wobei sich die zweite Kunststoffmasse form- und/oder stoffschlüssig mit der ersten Kunststoffmasse verbindet und wobei die Lasteinleitungselemente zumindest teilweise von der zweiten Kunststoffmasse umformt und dadurch eingebettet bzw. verankert werden.

Das zweite Verfahren kann als zweistufiges Verfahren bezeichnet werden. Die Herstellung eines Lasteinleitungselemente aufweisenden Profilendstücks kann in analoger Weise erfolgen. In analoger Weise können auch (erfindungsgemäße) Lasteinleitungselemente an einem vorgefertigten Profilbauteil befestigt werden, bspw. durch Anformen einer Manschette oder dergleichen, in der die Lasteinleitungselemente verankert werden.

Die faserhaltige Kunststoffmasse bzw. die erste faserhaltige Kunststoffmasse ist insbesondere eine mit Kurzfasern versetzte duroplastische oder auch thermoplastische Kunststoffmasse (Matrix). Die ohne vorgegebene Orientierung enthaltenen Verstärkungsfasern (bspw. Kohlenstofffasern, Glasfasern, Kunstfasern, Mineralfasern, Metallfasern, Mischfasern, Recyclingfasern oder dergleichen) weisen bspw. eine Länge von 1 mm bis 100 mm, bevorzugt von 2 mm bis 50 mm und insbesondere von 3 mm bis 25 mm auf (wie oben angegeben). Für die zweite faserhaltige Kunststoffmasse werden bevorzugt ebenfalls Kurzfasern verwendet, die jedoch deutlich kürzer sein können (z. B. wenigstens 50 %) als die in der ersten Kunststoffmasse enthaltenen Verstärkungsfasern. Für die zweite faserhaltige Kunststoffmasse wird bspw. ein SMC- oder BMC-Faser-Matrix-Halbzeug verwendet. Die Kunststoffmaterialien (Matrixwerkstoffe) und die Fasermaterialien können gleich oder unterschiedlich sein. Auch die Faserarten und -längen können gleich oder unterschiedlich sein.

Das Bereitstellen umfasst z. B. das Konfektionieren, das Herrichten, das Reinigen und/oder das Prüfen der zu verbindenden Profilbauteile. Das Bereitstellen umfasst gegebenenfalls auch das Erzeugen von Stoßflächen.

Die knotenseitigen Profilenden sind bevorzugt mit korrespondierenden Stoßflächen ausgebildet und werden derart im Presswerkzeug bzw. im ersten Presswerkzeug positioniert, dass zwischen den Stoßflächen ein homogener (d. h. im Wesentlichen konstant breiter) Beabstandungsspalt besteht, der während des Pressvorgangs mit der faserhaltigen Kunststoffmasse bzw. mit der ersten faserhaltigen Kunststoffmasse aufgefüllt wird. Bevorzugt ist wenigstens eines der Profilbauteile ein Hohlprofilbauteil, dessen offenes Profilende durch ein Verschlusselement verschlossen wird, um während des Pressvorgangs ein Eindringen der faserhaltigen Kunststoffmasse in das Hohlprofilbauteil zu verhindern. Insbesondere sind alle Profilbauteile einer herzustellenden Knotenstruktur Hohlprofilbauteile.

Das erfindungsgemäße Kraftfahrzeug, wobei es sich insbesondere um einen Personenkraftwagen handelt, umfasst einen aus Profilbauteilen gebildeten Rahmen oder Rahmenabschnitt (bspw. eine Vorderwagen-, Mittelwagenstruktur oder Hinterwagenstruktur), der wenigstens eine erfindungsgemäße Knotenstruktur aufweist, und Fahrwerkskomponenten (bspw. Achsen, Achsteile, Radträger und dergleichen), die an den in der Knotenstruktur integrierten Lasteinleitungselementen angebunden, insbesondere angeschraubt, sind.

Die Erfindung wird nachfolgend beispielhaft und in nicht einschränkender Weise anhand der schematischen Figuren näher erläutert. Die in den Figuren gezeigten und/oder nachfolgend erläuterten Merkmale können, auch losgelöst von konkreten Merkmalskombinationen, allgemeine Merkmale der Erfindung sein und die Erfindung weiterbilden.
- Fig. 1: zeigt in einer perspektivischen Ansicht einen aus Hohlprofilbauteilen gebildeten Rahmenabschnitt einer Kraftfahrzeugkarosserie.
- Fig. 2: zeigt in einer perspektivischen Unteransicht eine zum Rahmenabschnitt der Fig. 1 gehörende Knotenstruktur mit einem Verbindungsknoten.
- Fig. 3: zeigt in perspektivischen Ansichten zwei Ausführungsmöglichkeiten für Lasteinleitungselemente.
- Fig. 4: zeigt in einer perspektivischen Ansicht eine mögliche Befestigung eines Lasteinleitungselements gemäß Fig. 3b an einem Verbindungsknoten.
- Fig. 5: veranschaulicht in mehreren Schnittdarstellungen die Herstellung eines Verbindungsknotens mit integrierten Lasteinleitungselementen.

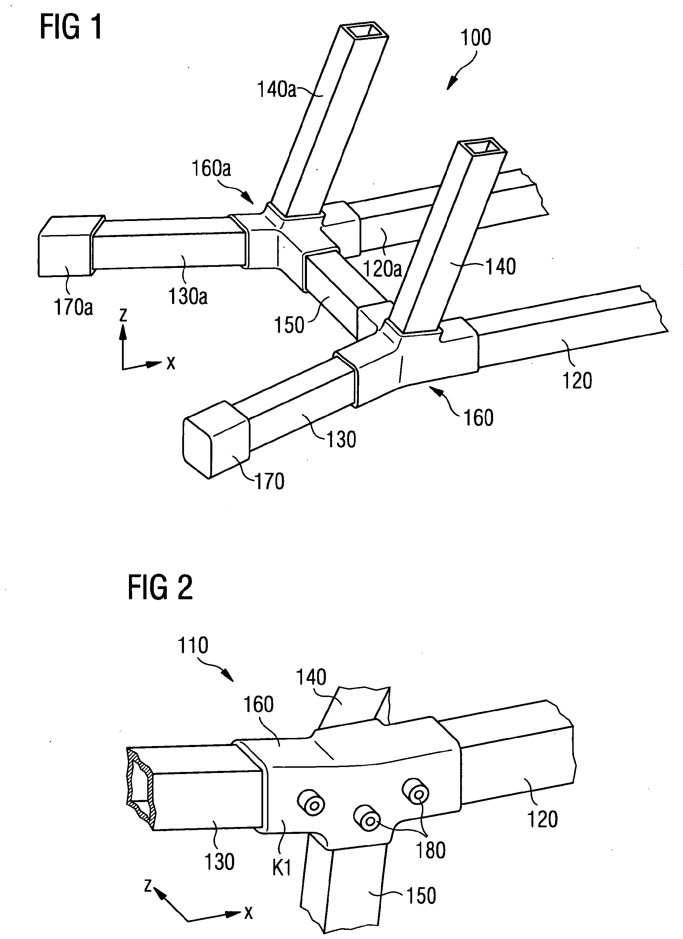

Bei dem in Fig. 1 gezeigten Rahmenabschnitt handelt es sich um eine Hinterwagenstruktur 100, die Teil eines Rahmens einer PKW-Fahrzeugkarosserie ist. Die Hinterwagenstruktur 100 umfasst mehrere aus Faserkunststoffverbundmaterial gebildete und getrennt voneinander vorgefertigte Hohlprofilbauteile 120, 120a, 130, 130a, 140, 140a und 150, die über Verbindungsknoten 160 und 160a fest miteinander verbunden sind. Die Verbindungsknoten 160 und 160a sind aus faserverstärktem Kunststoff K1 gebildet. Die als Längsträger fungierenden Rahmenprofilteile 130 und 130a sind ferner an ihren freien, von den Verbindungsknoten 160 und 160a wegweisenden Profilenden mit Profilendstücken 170 und 170a versehen. Die Profilendstücke 170 und 170a sind ebenfalls aus faserverstärktem Kunststoff gebildet.

Die Hohlprofilbauteile 120, 120a, 130, 130a, 140, 140a und 150 sind bspw. mittels Pultrusion (Faserkunststoffverbund-Pultrusionsprofile), Flechten oder Wickeln hergestellt. Die Hohlprofilbauteile 120, 120a, 130, 130a, 140, 140a und 150 können belastungsabhängig unterschiedlich ausgebildet sein und daher verschiedene Querschnitte und/oder Wanddicken aufweisen und/oder auch aus verschiedenen Faserkunststoffverbundmaterialien gebildet sein. Ferner können die Hohlprofilbauteile 120, 120a, 130, 130a, 140, 140a und 150 über ihren Längserstreckungen mit veränderlichen Querschnitten ausgebildet sein.

Die Hinterwagenstruktur 100 kann ferner offene Profilbauteile (bspw. U-Profile) und/oder Vollprofilbauteile aufweisen, sowie Profilbauteile, die aus anderen Materialien (bspw. auch Metall) gebildet sind, wobei auch solche Profilbauteile über die Verbindungsknoten 160 bzw. 160a in die Rahmenstruktur 100 eingebunden sein können. Die Hinterwagenstruktur 100 verfügt trotzt ihres geringen Gewichts über eine hervorragende Festigkeit, Steifigkeit und Crashstabilität.

Die in einem Verbindungsknoten 160 bzw. 160a verbundenen Hohlprofilbauteile bilden zusammen mit diesem Verbindungsknoten eine Knotenstruktur im Sinne der Erfindung. Fig. 2 zeigt in einer perspektivischen Unteransicht eine solche Knotenstruktur 110 für den in Fahrtrichtung x rechts liegenden Rahmenbereich. Die integrale Knotenstruktur 110 umfasst mehrere Hohlprofilbauteile 120, 130, 140 und 150, die an knotenseitigen Profilenden im Verbindungsknoten 160 fest miteinander verbunden sind. Der Verbindungsknoten 160 ist somit quasi ein Verbindungselement für die verbundenen Profilbauteile. Der Verbindungsknoten 160 weist an seiner Unterseite mehrere integrierte Lasteinleitungselemente 180 auf, die beispielhaft als Fahrwerksanbindungspunkte dienen. Der Verbindungsknoten 160 ist damit in seiner Funktion erweitert und hat neben der Verbindungsfunktion (bezüglich der Hohlprofilbauteile 120, 130, 140 und 150) auch eine Anbindungs- bzw. Befestigungsfunktion (bezüglich Fahrwerkskomponenten).

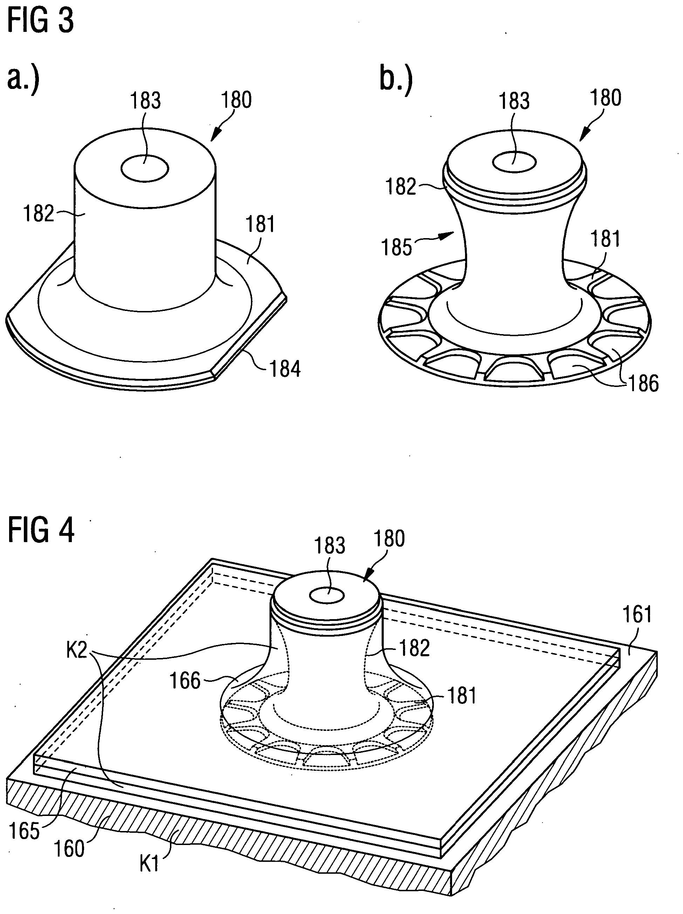

Bei den Lasteinleitungselementen 180 handelt es sich um separate Verbindungs- bzw. Krafteinleitungselemente (Inserts), die in die Kunststoffmasse K1 des Verbindungsknotens 160 eingebettet sind. Fig. 3a zeigt in einer perspektivischen Darstellung eine erste Ausführungsmöglichkeit eines solchen Lasteinleitungselements. Das im Wesentlichen rotationssymmetrische und einstückig aus einem Aluminiummaterial gebildete Lasteinleitungselement 180 weist einen Verankerungsteller bzw. -flansch 181 und eine davon abragende Hülse 182 auf. Die Hülse 182 ist mit einer Innenbohrung und insbesondere mit einem Innengewinde 183 (bspw. M8 und größer) ausgebildet. Anstelle einer Hülse 182 kann auch ein Bolzen, insbesondere mit Außengewinde, vorgesehen sein. Der Verankerungsteller 181 weist an seinem Außenumfang Abflachungen 184 auf, die als Verdrehschutz dienen. Das in Fig. 3b gezeigte Lasteinleitungselement 180 weist eine taillierte Hülse 182 und einen mit Verprägungen 186 ausgebildeten Verankerungsteller 181 auf. Die Taillierung 185 der Hülse 182 bewirkt beim Einbetten in Kunststoffmasse einen hinterschnittigen Formschluss, wie in Fig. 4 gezeigt. Die Verprägungen 186 dienen u. a. als Verdrehschutz.

Fig. 4 veranschaulicht in einer perspektivischen Darstellung eine Befestigungsmöglichkeit des in Fig. 3b gezeigten Lasteinleitungselements 180 an der Außenfläche 161 des Verbindungsknotens 160. Auf die Außenfläche 161 ist eine kurzfaserhaltige Kunststoffmasse K2 aufgebracht (bspw. durch Anspritzen und/oder Aufpressen), in der wenigstens ein Lasteinleitungselement 180 verankert ist, wobei sowohl der Verankerungsteller bzw. -flansch 181 als auch die taillierte Hülse 182 von der Kunststoffmasse K2 überformt sind. Die nur bereichsweise und flach aufgetragene Kunststoffmasse K2 wirkt ferner als lokale Verstärkung, und kann insofern auch als Verstärkungspatch fungieren. Zusätzlich kann eine Stabilisierung durch wenigstens eine über den Verankerungsteller 182 gelegte Fasermatte, Blechplatine oder dergleichen erfolgen. Diese Fasermatte bzw. Blechplatine 165 kann mit einer Öffnung 166 ausgebildet sein, durch welche die Hülse 182 hindurchragt.

Bei der in Fig. 4 gezeigten Befestigungsmöglichkeit wird das Lasteinleitungselement bzw. Insert 180 quasi von außen auf dem Knoten 160 positioniert und befestigt. In gleicher Weise kann das Lasteinleitungselement 180 auch an einem Profilendstück 170 oder direkt an einem Hohlprofilbauteil 120 bis 150 befestigt werden.

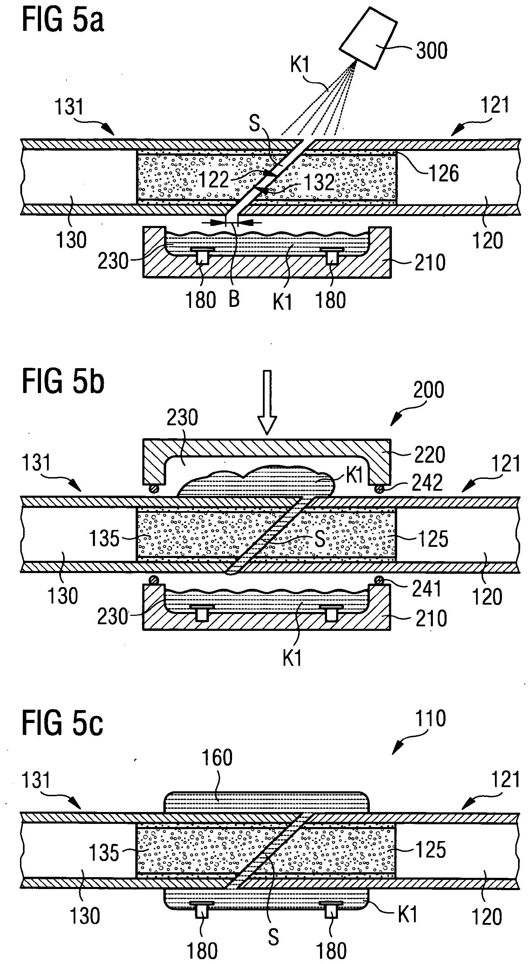

Eine andere Befestigungsmöglichkeit, bei der das Lasteinleitungselement 180 direkt im Kunststoffmaterial K1 des Verbindungsknotens 160 (oder Profilendstücks 170) verankert wird, wird nachfolgend anhand der Fig. 5 erläutert. In nicht einschränkender Weise wird dabei zum Zwecke einer vereinfachenden Darstellung und Beschreibung nur auf die Verbindung der beiden Hohlprofilbauteile 120 und 130 eingegangen.

Fig. 5 zeigt die knotenseitigen Profilenden 121 und 131 der beiden mittels Verbindungsknoten 160 zu verbindenden Hohlprofilbauteile 120 und 130. Die Hohlprofilbauteile 120 und 130 können, anders als dargestellt, zumindest an ihren zu verbindenden Profilenden bzw. an ihren knotenseitigen Endabschnitten 121 und 131 mit unterschiedlichen Querschnitten bzw. Querschnittsabmessungen und/oder mit unterschiedlichen Wandstärken bzw. Wanddicken ausgebildet sein.

Die knotenseitigen Profilenden 121 und 131 der zu verbindenden Hohlprofilbauteile 120 und 130 sind mittels pfropf- bzw. stopfenartiger Verschlusselemente 125 und 135 verschlossen. Die Verschlusselemente 125 und 135 sind aus einem Kunststoffschaummaterial, insbesondere einem temperatur- und druckbeständigen Hartschaum, gebildet und mittels Klebstoff 126 eingeklebt. Ferner sind die knotenseitigen Profilenden 121 und 131 mit korrespondierenden Stoßflächen 122 und 132 ausgebildet. Bei der in Fig. 5 gezeigten Ausführungsmöglichkeit sind diese Stoßflächen 122 und 132 lediglich beispielhaft als gerade Schrägflächen gestaltet.

Zur Erzeugung des Verbindungsknotens 160 werden die verschlossenen und mit korrespondierenden Stoßflächen 122 und 132 ausgebildeten Profilenden 121 und 131 der Hohlprofilbauteile 120 und 130 in ein den Verbindungsknoten 160 erzeugendes Presswerkzeug 200 eingelegt, wie in Fig. 5a gezeigt. Das Presswerkzeug 200 ist so ausgebildet, dass eine lagegenaue Fixierung der Profilenden 121 und 131 ermöglicht wird, wobei zwischen den Stoßflächen 122 und 132 ein homogener Beabstandungsspalt S besteht. Die Spaltbreite B des Beabstandungsspalts S beträgt bspw. 0,5 mm bis 2,0 mm.

In der Werkzeugkavität 230 des Werkzeugunterteils 210 befinden sich bereits die zu integrierenden Lasteinleitungselemente 180, die mit ihren später aus dem Verbindungsknoten 160 herausragenden Hülsen 182 in entsprechend ausgebildete Halterungen in der Kavitätswand eingesteckt sind. (Je nach Ausgestaltung sind auch andere Anordnungsmöglichkeiten für die Lasteinleitungselemente 180 in der Kavität 230 denkbar.) In der Werkzeugkavität 230 des Werkzeugunterteils 210 befindet sich ferner eine bereits vor dem Positionieren der Profilenden 121 und 131 eingebrachte kurzfaserhaltige bzw. Kurzfasern enthaltende Kunststoffmasse K1, insbesondere mit duroplastischer Matrix (Harz). Die Faserlänge der Kurzfasern beträgt bspw. 50 mm (bei Mischfasern gilt ein Mittelwert). Nach dem Positionieren der zu verbindenden Profilenden 121 und 131 wird auf den Verbindungsbereich weitere kurzfaserhaltige Kunststoffmasse K1 aufgebracht bzw. aufgespritzt, bspw. mithilfe der gezeigten Sprühvorrichtung 300.

Anschließend wird das Presswerkzeug 200 durch Absenken des Werkzeugoberteils 220 geschlossen, wie in Fig. 5b gezeigt, und ein Pressvorgang ausgeführt. Bei diesem Pressvorgang verteilt sich die definierte Menge der Kurzfasern enthaltenden Kunststoffmasse K1 in der Kavität 230. Hierbei werden die in der Kavität 230 angeordneten Profilenden 121 und 131 der Hohlprofilbauteile 120 und 130 formschlüssig umformt, wobei die kurzfaserhaltige Kunststoffmasse K1 auch in den Beabstandungsspalt S hinein gedrückt wird. Die Verschlusselemente 125 und 135 wirken als Barrieren und verhindern das Eindringen der faserhaltigen Kunststoffmasse K1 in die Profilkammern der Hohlprofilbauteile 120 und 130, wodurch sich u. a. in der Werkzeugkavität 230 ein ausreichend hoher Formungsdruck aufbauen kann. Gleichzeitig werden die Lasteinleitungselemente 180 in die Kunststoffmasse K1 eingebettet. Die Form des zu erzeugenden Verbindungsknotens 160 ergibt sich durch die Negativform der Werkzeugkavität 230. Zwischen der Kunststoffmasse K1 und den umschlossenen Profilenden 121 und 131 kann sich außerdem auch eine stoffschlüssige Verbindung ausbilden. Der hergestellte bzw. erzeugte Verbindungsknoten 160 ist nachbearbeitungsfrei.

Eine Verfahrensvariante sieht vor, dass die Kunststoffmasse K1 erst während des Pressvorgangs oder kurz davor in die Kavität 230 eingespritzt wird, was auch als Spritzpressen, ähnlich dem RTM-Verfahren, bezeichnet werden kann.

Bei der Erzeugung des Verbindungsknotens 160 werden nur die zu verbindenden Profilenden 121 und 131 in das Presswerkzeug 200 eingelegt, so dass die Hohlprofilbauteile 120 und 130 durch Öffnungen im Presswerkzeug 200 in die Werkzeugkavität 230 hineinragen. Während des Pressvorgangs wird die Abdichtung der Werkzeugkavität 230 mithilfe von Dichtungen 241 und 242 bewerkstelligt. Die Verschlusstiefen an den Profilenden 121 und 131 sind so bemessen, dass die druckfesten Verschlusselemente 125 und 135 wenigstens bis zu dem durch die Werkzeugdichtungen 241 und 242 gebildeten Werkzeugdichtungsbereich ragen. Dadurch wird eine Stabilisierung der Hohlprofilwandungen bewirkt und die Kavitätsabdichtung verbessert.

Nachdem die Kunststoffmasse K1 infolge von Druck- und Temperatureinwirkung ausgehärtet ist, kann das Presswerkzeug 200 geöffnet und die hergestellte Knotenstruktur 110 entnommen werden, wie in Fig. 5c gezeigt. Die Wandstärke des Verbindungsknotens 160 kann im Bereich von 1 mm bis 15 mm, insbesondere von 4 mm bis 10 mm, liegen, wobei sowohl gleiche als auch unterschiedliche Wandstärken vorgesehen sein können. Die integrierten Lasteinleitungselemente 180 ragen mit ihren Hülsen 182 aus der Kunststoffmasse K1 heraus und bilden dadurch Befestigungsdome (oder auch Befestigungsbolzen mit Außengewinde), wobei auch eine vollständige Einbettung der Hülsen 182 möglich ist.

In einer zur Fig. 5 analogen Vorgehensweise kann auch ein Profilendstück 170 bzw. 170a mit integrierten Lasteinleitungselementen 180 erzeugt werden. Ferner kann in einer ersten Stufe zunächst nur der Verbindungsknoten 160 bzw. das Profilendstück 170 erzeugt werden. In einer zweiten Stufe kann dann wenigstens ein Lasteinleitungselement 180 am Verbindungsknoten 160 bzw. Profilendstück 170 befestigt werden, bspw. wie im Zusammenhang mit der Fig. 4 erläutert. Die zweitstufige Herstellungsweise führt mitunter zu einer höheren Flexibilität.

## Patentansprüche

1. Knotenstruktur (110) für eine Fahrzeugkarosserie, mit wenigstens zwei, insbesondere aus Faserkunststoffverbundmaterial gebildeten, Profilbauteilen (120, 130) und einem aus faserverstärktem Kunststoff (K1) gebildeten Verbindungsknoten (160), der die Profilbauteile (120, 130) an knotenseitigen Profilenden (121, 131) verbindet,
**dadurch gekennzeichnet, dass**
der Verbindungsknoten (160) mit integrierten metallischen Lasteinleitungselementen (180) für die Anbindung wenigstens eines weiteren Bauteils ausgebildet ist, wobei die Lasteinleitungselemente (180) einen Verankerungsteller (181) und eine davon abragende Hülse (182) aufweisen und die Verankerungsteller (181) mit einem Verdrehschutz (184) ausgebildet sind, wobei die Hülse (182) mit einer Taillierung (185) ausgebildet ist.

2. Knotenstruktur (110) für eine Fahrzeugkarosserie, mit wenigstens zwei, insbesondere aus Faserkunststoffverbundmaterial gebildeten, Profilbauteilen (120, 130) und einem aus faserverstärktem Kunststoff (K1) gebildeten Verbindungsknoten (160), der die Profilbauteile (120, 130) an knotenseitigen Profilenden (121, 131) verbindet,
**dadurch gekennzeichnet, dass**
wenigstens eines der Profllbauteile (130) an seinem anderen Profilende ein aus faserverstärktem Kunststoff (K1) gebildetes Profilendstück (170) aufweist, das mit integrierten metallischen Lasteinleitungselementen (180) für die Anbindung wenigstens eines weiteren Bauteils ausgebildet ist, wobei die Lasteinleitungselemente (180) einen Verankerungsteller (181) und eine davon abragende Hülse (182) aufweisen und die Verankerungsteller (181) mit einem Verdrehschutz (184) ausgebildet sind, wobei die Hülse (182) mit einer Taillierung (185) ausgebildet ist.

3. Knotenstruktur (110) nach Anspruch 1 und/oder Anspruch 2,
**dadurch gekennzeichnet, dass**
die Lasteinleitungselemente (180) aus Aluminium gebildet sind.

4. Verfahren zur Herstellung einer Knotenstruktur (110) gemäß Anspruch 1, mit den Schritten:
- Bereitstellen der vorgefertigten Profilbauteile (120, 130);
- Positionieren der knotenseitigen Profilenden (121, 131) und der metallischen Lasteinleitungselemente (180) in einem den Verbindungsknoten (160) erzeugenden Presswerkzeug (200), wobei die Lasteinleitungselemente (180) einen Verankerungsteller (181) und eine davon abragende Hülse (182) aufweisen und die Verankerungsteller (181) mit einem Verdrehschutz (184) ausgebildet sind;
- Ausführen eines Pressvorgangs unter Zugabe einer faserhaltigen Kunststoffmasse (K1) zur Erzeugung des die Profilenden (121, 131) verbindenden Verbindungsknotens (160), wobei die Lasteinleitungselemente (180) in der Kunststoffmasse (K1) verankert werden.

5. Verfahren zur Herstellung einer Knotenstruktur (110) gemäß Anspruch 1, mit den Schritten:
- Bereitstellen der vorgefertigten Profilbauteile (120, 130);
- Positionieren der knotenseitigen Profilenden (121, 131) in einem den Verbindungsknoten (160) erzeugenden Presswerkzeug (200);
- Ausführen eines Pressvorgangs unter Zugabe einer ersten faserhaltigen Kunststoffmasse (K1) zur Erzeugung des die Profilenden (121, 131) verbindenden Verbindungsknotens (160);
- Entnehmen der Knotenstruktur (110) und Positionieren des zuvor erzeugten Verbindungsknotens (160) zusammen mit den metallischen Lasteinleitungselementen (180) in einem anderen Presswerkzeug, wobei die Lasteinleitungselemente (180) einen Verankerungsteller (181) und eine davon abragende Hülse (182) aufweisen und die Verankerungsteller (181) mit einem Verdrehschutz (184) ausgebildet sind;
- Ausführen eines weiteren Pressvorgangs unter Zugabe einer zweiten faserhaltigen Kunststoffmasse (K2), wobei die Lasteinleitungselemente (180) in dieser Kunststoffmasse (K2) verankert werden.

6. Verfahren nach Anspruch 4 oder 5,
**dadurch gekennzeichnet, dass**
die knotenseitigen Profilenden (121, 131) mit korrespondierenden Stoßflächen (122, 132) ausgebildet sind und derart im Presswerkzeug (200) positioniert werden, dass zwischen den Stoßflächen (122, 132) ein homogener Beabstandungsspalt (S) besteht, der während des Pressvorgangs mit der faserhaltigen Kunststoffmasse (K1) bzw. mit der ersten faserhaltigen Kunststoffmasse (K1) aufgefüllt wird.

7. Kraftfahrzeug, insbesondere Personenkraftwagen, mit einem aus Profilbauteilen (120, 130, 140, 150) gebildeten Rahmen oder Rahmenabschnitt (100), der wenigstens eine Knotenstruktur (110) aufweist, die gemäß Anspruch 1 ausgebildet ist, und mit Fahrwerkskomponenten, die an den integrierten Lasteinleitungselementen (180) angebunden sind.

## Claims

1. Node structure (110) for a vehicle body, with at least two profile components (120, 130), more particularly formed from fibre-plastic composite material, and a connecting node (160) formed from fibre-reinforced plastic (K1), which connects the profile components (120, 130) on node-side profile ends (121, 131), **characterised in that** the connecting node (160) is configured with integrated metallic load introducing elements (180) for the connecting of at least one further component, wherein the load introducing elements (180) have an anchoring plate (181) and a sleeve (182) projecting away from it and the anchoring plates (181) are configured with anti-rotation protection (184), wherein the sleeve (182) is configured with a waisted shape (185).

2. Node structure (110) for a vehicle body, with at least two profile components (120, 130), more particularly formed from fibre-plastic composite material, and a connecting node (160) formed from fibre-reinforced plastic (K1), which connects the profile components (120, 130) on node-side profile ends (121, 131), **characterised in that** at least one of the profile components (130) has on its other profile end a profile end piece (170) formed from fibre-reinforced plastic (K1), said profile end piece being configured with integrated metallic load introducing elements (180) for the connecting of at least one further component, wherein the load introducing elements (180) have an anchoring plate (181) and a sleeve (182) projecting away from it and the anchoring plates (181) are configured with anti-rotation protection (184), wherein the sleeve (182) is configured with a waisted shape (185).

3. Node structure (110) according to claim 1 and/or claim 2, **characterised in that** the load introducing elements (180) are formed of aluminium.

4. Method for producing a node structure (110) according to claim 1, comprising the steps:
- provision of the prefabricated profile components (120, 130);
- positioning of the node-side profile ends (121, 131) and of the metallic load introducing elements (180) in a pressing tool (200) that produces the connecting node (160), wherein the load introducing elements (180) have an anchoring plate (181) and a sleeve (182) projecting away from it and the anchoring plates (181) are configured with anti-rotation protection (184);
- performing of a pressing process with the addition of a fibre-containing polymer melt (K1) to produce the connecting node (160) connecting the profile ends (121, 131), wherein the load introducing elements (180) are anchored in the polymer melt (K1).

5. Method for producing a node structure (110) according to claim 1, comprising the steps:
- provision of the prefabricated profile components (120, 130);
- positioning of the node-side profile ends (121, 131) in a pressing tool (200) that produces the connecting node (160);
- performing of a pressing process with the addition of a first fibre-containing polymer melt (K1) to produce the connecting node (160) connecting the profile ends (121, 131);
- removal of the node structure (110) and positioning of the previously produced connecting node (160) together with the metallic load introducing elements (180) in another pressing tool, wherein the load introducing elements (180) have an anchoring plate (181) and a sleeve (182) projecting away from it and the anchoring plates (181) are configured with anti-rotation protection (184);
- performing of a further pressing process with the addition of a second fibre-containing polymer melt (K2), wherein the load introducing elements (180) are anchored in this polymer melt (K2).

6. Method according to claim 4 or 5, **characterised in that** the node-side profile ends (121, 131) are configured with corresponding abutting surfaces (122, 132) and are positioned in the pressing tool (200), such that a homogeneous spacing gap (S) exists between the abutting surfaces (122, 132), said spacing gap being filled up with the fibre-containing polymer melt (K1) or with the first fibre-containing polymer melt (K1) during the pressing process.

7. Motor vehicle, more particularly passenger car, with a frame or frame portion (100) formed from profile components (120, 130, 140, 150), which has at least one node structure (110) configured according to claim 1, and with chassis components, which are connected on the integrated load introducing elements (180).

## Revendications

1. Structure de liaison (110) pour une carrosserie de véhicule, avec au moins deux composants profilés (120, 130) formés en particulier de matériau composite de matière plastique fibreuse et une liaison de raccordement (160) formée en une matière plastique (K1) renforcée de fibre qui raccorde les composants profilés (120, 130) sur des extrémités profilées (121, 131) côté liaison,
**caractérisée en ce que**
la liaison de raccordement (160) est réalisée avec des éléments d'introduction de charge (180) métalliques intégrés pour la liaison d'au moins un autre composant, dans laquelle les éléments d'introduction de charge (180) présentent une rondelle d'ancrage (181) et une douille (182) dépassant de celle-ci et les rondelles d'ancrage (181) sont réalisées avec une protection contre la rotation (184), dans laquelle la douille (182) est réalisée avec une courbure (185).

2. Structure de liaison (110) pour une carrosserie de véhicule, avec au moins deux composants profilés (120, 130) formés en particulier de matériau composite de matière plastique fibreuse et une liaison de raccordement (160) formée en une matière plastique (K1) renforcée de fibre qui raccorde les composants profilés (120, 130) sur des extrémités profilées (121, 131) côté liaison,
**caractérisée en ce que**
au moins un des composants profilés (130) sur son autre extrémité profilée présente une pièce d'extrémité profilée (170) formée d'une matière plastique (K1) renforcée de fibre qui est réalisée avec des éléments d'introduction de charge (180) métalliques intégrés pour la liaison d'au moins un autre composant, dans lequel les éléments d'introduction de charge (180) présentent une rondelle d'ancrage (181) et une douille (182) dépassant de celle-ci et les rondelles d'ancrage (181) sont réalisées avec une protection contre la rotation (184), dans laquelle la douille (182) est réalisée avec une courbure (185).

3. Structure de liaison (110) selon la revendication 1 et/ou revendication 2,
**caractérisée en ce que**
les éléments d'introduction de charge (180) sont formés d'aluminium.

4. Procédé de fabrication d'une structure de liaison (110) selon la revendication 1 avec les étapes :
- la mise à disposition des composants profilés (120, 130) préfabriqués ;
- le positionnement des extrémités profilées (121, 131) côté liaison et des éléments d'introduction de charge (180) métalliques dans un outil de pressage (200) générant la liaison de raccordement (160), dans lequel les éléments d'introduction de charge (180) présentent une rondelle d'ancrage (181) et une douille dépassant de celle-ci (182) et les rondelles d'ancrage (181) sont réalisées avec une protection contre la rotation (184) ;
- la réalisation d'un processus de pressage en ajoutant une masse plastique (K1) contenant des fibres pour la génération de la liaison de raccordement (160) raccordant les extrémités profilées (121, 131), dans lequel les éléments d'introduction de charge (180) sont ancrés dans la masse plastique (K1).

5. Procédé de fabrication d'une structure de liaison (110) selon la revendication 1 avec les étapes :
- la mise à disposition des composants profilés (120, 130) préfabriqués ;
- le positionnement des extrémités profilées (121, 131) côté liaison dans un outil de pressage (200) générant la liaison de raccordement (160) ;
- la réalisation d'un processus de pressage en ajoutant une première masse plastique (K1) contenant des fibres pour la génération de la liaison de raccordement (160) raccordant les extrémités profilées (121, 131) ;
- le retrait de la structure de liaison (110) et le positionnement de la liaison de raccordement (160) générée précédemment conjointement avec les éléments d'introduction de charge (180) métalliques dans un autre outil de pressage, dans lequel les éléments d'introduction de charge (180) présentent une rondelle d'ancrage (181) et une douille (182) dépassant de celle-ci et les rondelles d'ancrage (181) sont réalisées avec une protection contre la rotation (184) ;
- la réalisation d'un autre processus de pressage en ajoutant une seconde masse plastique (K2) contenant des fibres, dans lequel les éléments d'introduction de charge (180) sont ancrés dans cette masse plastique (K2).

6. Procédé selon la revendication 4 ou 5,
**caractérisé en ce que**
les extrémités profilées (121, 131) côté liaison sont réalisées avec des surfaces d'impact (122, 132) correspondantes et sont positionnées dans l'outil de pressage (200) de telle manière qu'une fente d'espacement (S) homogène existe entre les surfaces d'impact (122, 132), laquelle est remplie pendant le processus de pressage avec la masse plastique (K1) contenant des fibres ou avec la première masse plastique (K1) contenant des fibres.

7. Véhicule automobile, en particulier voiture particulière, avec un cadre ou une section de cadre (100) formé(e) de composants profilés (120, 130, 140, 150) qui présente au moins une structure de liaison (110) qui est réalisée selon la revendication 1, et avec des composants de dispositif de roulement qui sont liés aux éléments d'introduction de charge (180) intégrés.
